# FASCICULE DE BREVET EUROPEEN

(11) **EP 2 397 395 B1**
(45) Date de publication et mention de la délivrance du brevet: **11.09.2013**
(21) Numéro de dépôt: 11169939.3
(22) Date de dépôt: 15.06.2011
(51) Int. Cl.: B62D 49/06

(54) **véhicule porte-outil automoteur à 4 roues dissymétriques**
Selbstfahrender Werkzeugträgerwagen mit 4 asymmetrischen Rädern
Motorised tool-carrier vehicle with 4 skewed wheels

(30) Priorité: 16.06.2010 FR 1002550
(43) Date de publication de la demande: 21.12.2011
(73) Titulaire: Tomasini, Daniel, 10200 Proverville (FR)
(72) Inventeur: Tomasini, Daniel, 10200 PROVERVILLE (FR); Tomasini, Arnaud, 10200 PROVERVILLE (FR)
(74) Mandataire: Oudin, Stéphane

(56) Documents cités:
- FR-A- 1 512 387
- FR-A1- 2 354 692
- FR-A1- 2 509 114
- FR-A1- 2 678 888

## Description

### Domaine technique

La présente invention concerne un véhicule porte-outil automoteur à au moins quatre roues dissymétriques de type tracteur enjambeur destiné à travailler dans des cultures en lignes, notamment de la vigne, en chevauchant une ou plusieurs rangées de plants.

### Technique antérieure

On connaît déjà différents types de véhicules de ce genre, tous se caractérisent notamment par leur faible maniabilité consécutive à leur encombrement, leur poids ou leur structure. Un tel véhicule est divulgué dans FR 2678888.

En particulier, ces véhicules sont pratiquement inutilisables dans les vignes à rangs serrés et ayant un faible dégagement en bout de rang rendant délicat, voire impossible, le retournement à 180° des véhicules pour attaquer le rang suivant.

Pour pallier ces inconvénients, on connaît déjà, notamment par la demande de brevet français FR 2 509 114, une machine à vendanger du type automoteur à plateforme enjambeuse portant une tête de récolte pendulaire, remarquable en ce que ladite plate-forme est tripode et repose, d'un coté de la tête de récolte, sur deux roues alignées motrices et directrices et, de l'autre côté de la tête, sur une roue motrice placée entre les deux autres roues. En outre, ladite machine comporte une commande d'orientation des deux roues directrices couplée par un système permettant, d'une part, l'orientation simultanée des deux roues d'un même côté ou en sens inverse ou, d'autre part, l'orientation d'une seule des deux roues. Un tel agencement permet ainsi à la machine de pivoter littéralement sur elle-même, ce qui, compte tenu de l'encombrement réduit en longueur de la machine, l'autorise à virer de 180° en bout de rang dans un espace extrêmement réduit, et également de se déplacer en crabe pour rectifier sa trajectoire et compenser les déclivités de terrains notamment.

Toutefois, malgré ses avantages, cette machine à vendanger connue présente un certain nombre d'inconvénients majeurs. En effet, cette machine comporte un poste de commande situé au-dessus des rangées de plans et ne permet donc pas au conducteur d'intervenir sur les cultures sans avoir à sortir dudit poste de commande. De plus, la configuration de ces trois roues manque de stabilité, car elle ne permet pas d'éviter les mouvements de balancier de cette machine lors notamment du passage de chevet situé à l'entrée dans la vigne. Enfin, cette machine ne permet pas d'adapter la largeur de sa voie à la largeur des rangées et donc à différents types de plantations.

### Exposé de l'invention

Le but de la présente invention est donc de pallier les inconvénients précédemment cités et de proposer un véhicule porte-outil automoteur de type tracteur enjambeur garantissant une grande stabilité et une exceptionnelle maniabilité, ledit véhicule étant agencé pour faire varier facilement sa voie afin de s'adapter à différents types de plantations en ligne et permettant au conducteur d'intervenir sur les cultures sans avoir à sortir dudit véhicule.

Conformément à l'invention, il est donc proposé un véhicule porte-outil automoteur à au moins quatre roues dissymétriques de type tracteur enjambeur destiné à travailler dans des cultures en lignes, notamment de la vigne, comprenant un premier module comportant une première et une deuxième roues alignées longitudinalement entre elles, au moins un second module muni d'une troisième roue et d'au moins une quatrième roue alignées longitudinalement entre elles, ledit second module étant solidarisé au premier module par au moins une poutre de sorte à former un portique apte à enjamber au moins une ligne de culture, ledit véhicule porte-outil automoteur étant remarquable en ce que les première et deuxième roues sont des roues motrices et directrices, en ce que la troisième roue est une roue motrice dont le centre est disposé à proximité de la médiatrice du segment formé par les centres respectifs des première et deuxième roues, et en ce que la quatrième roue est une roue folle apte à pivoter librement autour d'un axe sensiblement vertical et est globalement alignée latéralement avec l'une des première et deuxième roues du premier module.

Le véhicule porte-outil automoteur selon l'invention est donc stable et très maniable.

Selon un mode de réalisation préférentiel, lesdites troisième et quatrième roues sont solidaires d'un longeron articulé par rapport audit second module.

Selon un mode de réalisation avantageux, la(les) quatrième(s) roue(s) est de diamètre inférieur à celui des première, deuxième et troisième roues et est désaxée vers le sol et vers l'extrémité du véhicule porte-outil automoteur par rapport à la roue du premier module sur laquelle elle est alignée.

De manière préférée, la troisième roue est débrayable.

Selon un autre mode de réalisation, le véhicule porte-outil automoteur comporte un dispositif de direction permettant d'orienter les première et deuxième roues en sens inverse de sorte que lesdites première et deuxième roues se déplacent toujours sur la même courbe.

Selon un mode de réalisation avantageux, le véhicule porte-outil automoteur comprend deux poutres, chacune des poutres étant agencée pour recevoir un outil et comportant un moyen de réglage permettant d'adapter l'écartement desdits premier et second modules entre eux.

De manière préférée, le véhicule porte-outil automoteur comprend un dispositif anti-devers agencé pour corriger son assiette.

Selon un mode de réalisation avantageux, le véhicule porte-outil automoteur comporte cabine de pilotage positionnée entre les première et deuxième roues très près du sol, de sorte que le conducteur puisse intervenir sur les cultures sans avoir à sortir de ladite cabine de pilotage.

### Description sommaire des figures

D'autres avantages et caractéristiques ressortiront mieux de la description qui va suivre d'un mode d'exécution d'un véhicule porte-outil automoteur selon l'invention en référence aux figures annexées sur lesquelles :
- la figure 1 est une vue en perspective d'un véhicule porte-outil automoteur selon l'invention, en condition normale d'utilisation ;
- la figure 2 est une vue de droite du véhicule porte-outil automoteur de la figure précédente ;
- la figure 3 est une vue de face du véhicule porte-outil automoteur de la figure 1 ;
- la figure 4 est une vue de gauche du véhicule porte-outil automoteur de la figure 1 ;
- la figure 5 est une vue arrière du véhicule porte-outil automoteur de la figure 1 ;
- la figure 6 est une vue de dessus du véhicule porte-outil automoteur selon l'invention, en mode déplacement "voie étroite" et en mode déplacement "voie élargie" représenté en pointillé.

### Meilleure manière de réaliser l'invention technique

On décrira ci-après le véhicule porte-outil automoteur lors d'une utilisation sur un sol horizontal. Il va de soi que le sol sur lequel se déplace ledit véhicule porte-outil automoteur pourra également être plus ou moins incliné, les termes vertical et/ou horizontal seront alors à adapter à l'inclinaison dudit sol.

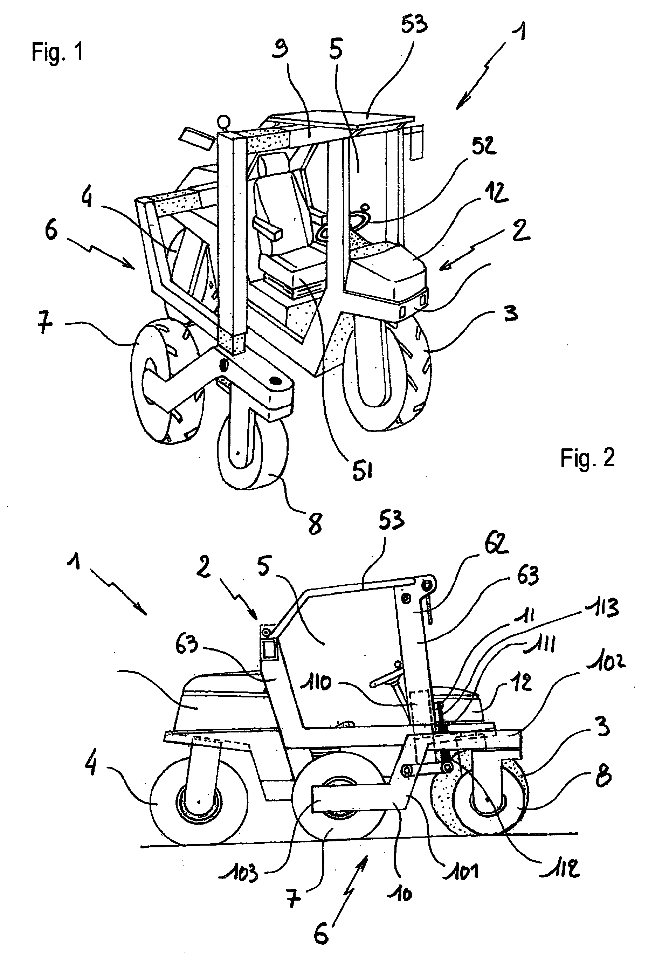

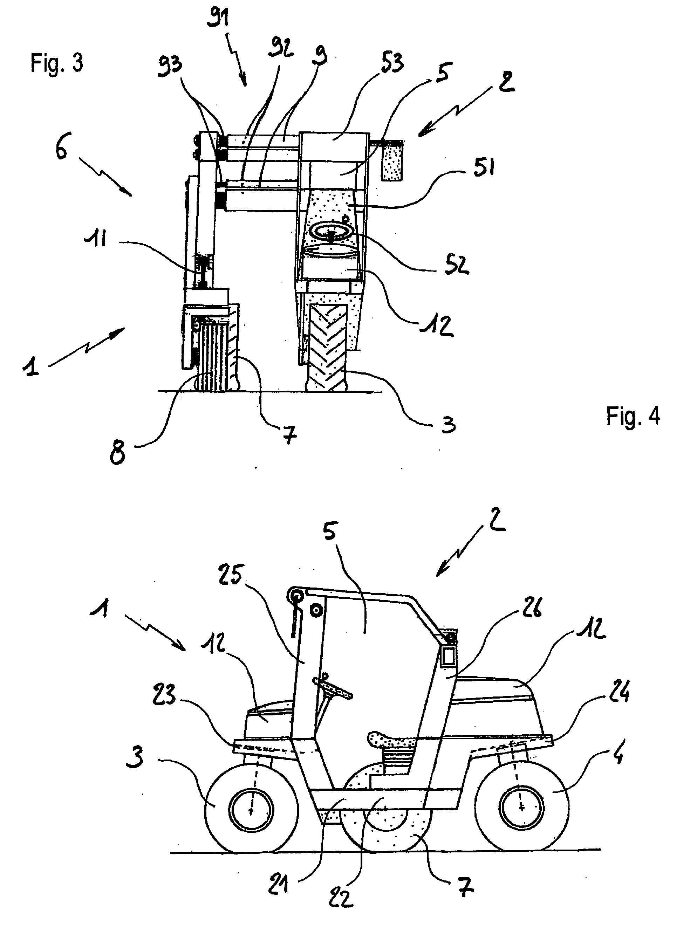

Ainsi, en référence aux figures 1 à 6, le véhicule porte-outil automoteur 1 comporte au moins quatre roues dissymétriques et est de type tracteur enjambeur destiné à travailler dans des cultures en lignes, notamment de la vigne. Ledit véhicule porte-outil automoteur 1 comprend un premier module 2 comportant une première et une deuxième roues 3, 4 alignées longitudinalement entre elles et une cabine de pilotage 5 disposée entre lesdites première et deuxième roues 3, 4, ces dernières étant motrices et directrices. Le véhicule porte-outil automoteur 1 comporte en outre au moins un second module 6 muni d'une troisième roue 7 et d'au moins une quatrième roue 8 folle alignées longitudinalement entre elles. On désigne ici par roues alignées longitudinalement entre elles des roues ayant leur plan circonférentiel médian sensiblement coplanaires et sensiblement parallèles au plan longitudinal vertical du véhicule, lorsque ledit véhicule porte-outil automoteur 1 avance en ligne droite.

Le second module 6 est solidarisé au premier module 2 par au moins une poutre 9 de sorte à former un portique apte à enjamber au moins une ligne de culture, ladite poutre 9 étant avantageusement pourvue d'un moyen de réglage 91 permettant d'adapter l'écartement entre lesdits premier et second modules 2, 6, et donc l'écartement entre les première et deuxième roues 3, 4 et la troisième et quatrième roues 7, 8, à la largeur de la ou des rangées de plants à enjamber.

Le premier module 2 comporte en outre un châssis 21 en forme de berceau comprenant une partie médiane 22 en forme globale de U évasé, une plateforme avant 23 et une plateforme arrière 24, lesdites plateformes avant et arrière 23, 24 s'étendant sensiblement horizontalement respectivement de l'extrémité libre de l'une des ailes de la partie médiane 22 et sur toute la largeur de ladite partie médiane 22. De plus, le premier module 2 comprend deux montants avant 25 et deux montants arrière 26, lesdits deux montants avant 25 s'étendant sensiblement verticalement de l'extrémité libre de l'aile de la partie médiane 22 située du coté de la plateforme avant 23, lesdits deux montants arrière 26 s'étendant sensiblement verticalement de l'extrémité libre de l'aile de la partie médiane 22 située du coté de la plateforme arrière 24. La partie médiane 22 du châssis 21 et les quatre montants avant et arrière 25, 26 délimitent en partie la cabine de pilotage 5. Cette dernière est munie d'une assise 51 et d'un poste de commande 52, et est avantageusement au moins en partie fermée, d'une part, par un élément de toiture 53 au moins en partie opaque et, d'autre part, par au moins une porte (non représentée) de préférence coulissante et au moins en partie transparente.

Les première et deuxième roues 3, 4 sont montées pivotantes autour d'un axe sensiblement vertical respectivement sous la plateforme avant 23 et sous la plateforme arrière 24 du châssis 21. Avec une telle configuration, on comprend bien que ladite assise 51 de la cabine de pilotage 5 est positionnée entre les première et deuxième roues 3, 4, près des axes de rotation des première et deuxième roues 3, 4, donc très près du sol, de sorte que le conducteur puisse intervenir sur les cultures sans avoir à sortir de ladite cabine de pilotage 5 et du véhicule porte-outil automoteur 1. En outre, ladite assise 51 est avantageusement montée pivotante par rapport au châssis 21 autour d'un axe vertical afin de faciliter et de sécuriser la montée et la descente d'un opérateur dans la cabine de pilotage 5 sans avoir à utiliser d'échelle ou de marches séparées. De plus, l'assise 51 étant disposée avec une garde au sol peu importante à environ 75 centimètres du sol par exemple, les pieds de l'opérateur viennent naturellement en appui sur le sol, ce qui permet à l'opérateur de monter et de descendre facilement et sans effort dans la cabine de pilotage 5.

Par ailleurs, pour faciliter des manoeuvres dans des petites tournières nécessitant des rayons de braquage réduits, le véhicule porte-outil automoteur 1 comporte un dispositif de direction (non représenté) permettant d'orienter les première et deuxième roues 3, 4 en sens inverse de sorte que lesdites première et deuxième roues 3, 4 se déplacent toujours sur la même courbe. Ce dispositif de direction pourra être un palonnier de type aviation couplé à un inverseur de rotation à deux pignons. Toutefois, pour des raisons d'encombrement, le dispositif de direction comprend avantageusement un ensemble (roue dentée-vis sans fin-moteur) de type "SLEW DRIVE" (non représenté), par exemple, couplé à chacune des première et deuxième roues 3, 4. Chaque vis sans fin sera mise en rotation par le moteur (non représenté), de préférence électrique, de sorte à entrainer en rotation la roue dentée associée, cette dernière étant solidaire d'une desdites première et deuxième roues 3, 4. Les deux moteurs sont alors couplés et tournent en sens inverse.

Le second module 6 comporte en outre un châssis 61, en forme globale de U évasé et comprenant une aile avant 62 et une aile arrière 63, lesdites ailes avant et arrière 62, 63 étant situées respectivement au droit des montants avant et arrière 25, 26 du premier module 2. De plus, les extrémités supérieures des ailes avant et arrière 62, 63 sont de préférence situées respectivement au même niveau que celles des montants avant et arrière 25, 26 du premier module 2. Avec une telle configuration et pour des raisons évidentes de cinématique, le véhicule porte-outil automoteur 1 comprend avantageusement deux poutres 9 munies chacune d'un moyen de réglage 91 permettant d'adapter l'écartement desdits premier et second modules 2, 6 entre eux, l'une desdites poutres 9 reliant l'extrémité supérieure de l'aile avant 62 du second module 6 et celle du montant avant 25 associé du premier module 2, et l'autre poutre 9 reliant l'extrémité supérieure de l'aile arrière 63 du second module 6 et celle du montant arrière 26 associé du premier module 2. Cette configuration permet de créer un portique constitué desdites poutres 9 et des premier et second modules 2, 6, ledit portique étant apte à enjamber la ou les rangées de plants.

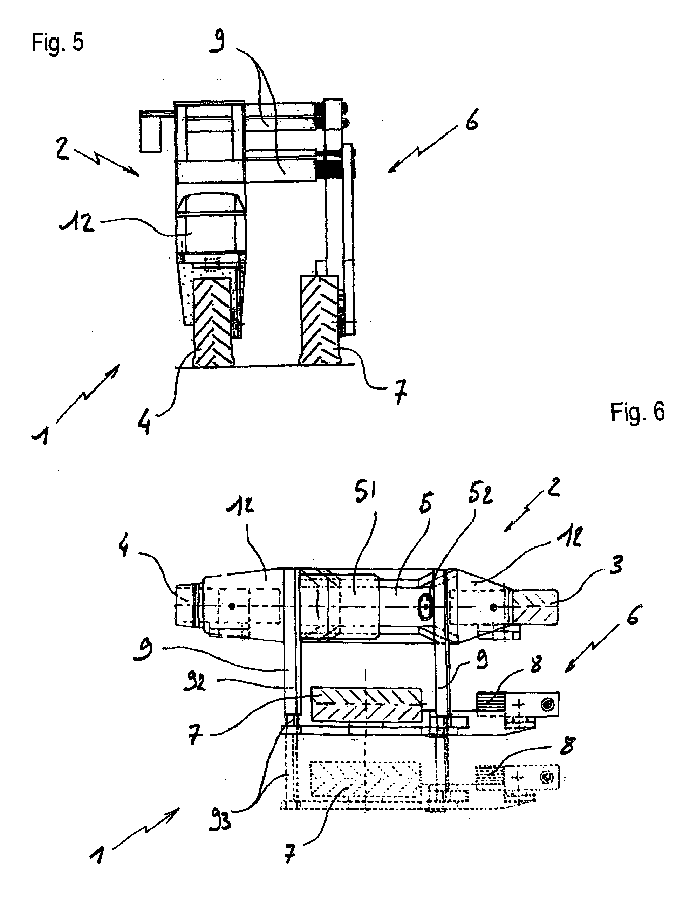

Les moyens de réglage 91 sont avantageusement des actionneurs de type vérin double effet comportant un corps 92 fixé sur la poutre 9 solidaire du premier module 2 et une tige 93 apte à coulisser en partie à l'intérieur dudit corps 92 et solidaire du second module 6. Ainsi, lorsque la tige 93 est entièrement rentrée, les premier et second modules 2, 6 sont rapprochés et le véhicule porte-outil automoteur 1 se trouve en position "voie étroite", et lorsque la tige 93 est entièrement sortie, les premier et second modules 2, 6 sont éloignés et le véhicule porte-outil automoteur 1 se trouve en position "voie élargie", comme représenté à la figure 6.

Le réglage de la largeur de la voie se fait de préférence à l'arrêt du véhicule porte-outil automoteur 1 pour éviter des contraintes mécaniques au niveau du châssis et des roues dudit véhicule 1. Pour ce faire, les première et deuxième roues 3, 4 sont bloquées et la troisième roue 7 est tournée de 90° autour d'un axe sensiblement vertical. La rotation de troisième roue 7 peut être obtenue soit manuellement soit de façon assistée à l'aide, par exemple, d'un ensemble (roue dentée-vis sans fin-moteur) semblable à ceux utilisés pour le dispositif de direction. Ensuite, on fait varier la largeur de la voie en déplaçant le second module 6 en appui sur les troisième et quatrième roues 7, 8 par rapport au premier module 2, grâce aux moyens de réglage 91. Une fois la largeur de voie réglée, il suffit de replacer et bloquer la troisième roue 7 de sorte que son plan circonférentiel médian soit sensiblement parallèle au plan longitudinal vertical du véhicule.

Toutefois, on comprend bien que la motricité de la troisième roue 7 pourra également être employée pour faciliter le réglage de la largeur de la voie.

Le second module 6 comporte en outre un longeron 10 en forme générale de demi-berceau sensiblement parallèle au plan longitudinal vertical du véhicule porte-outil automoteur 1. Ledit demi-berceau est composé d'une poutre médiane 101 globalement verticale, d'une poutre avant 102 s'étendant sensiblement horizontalement de l'extrémité supérieure de ladite poutre médiane 101 et d'une poutre arrière 103 s'étendant sensiblement horizontalement de l'extrémité inférieure de ladite poutre médiane 101. On comprend bien que le longeron 10 pourra avoir une toute autre forme et par exemple ne pas comporter poutre arrière 103 sans sortir du cadre de la présente invention.

Ce longeron 10 est articulé au châssis 61 du second module 6 autour d'un axe globalement horizontal et reçoit la troisième roue 7 sur ladite poutre arrière 103 et la quatrième roue 8 montée pivotante autour d'un axe sensiblement vertical sur ladite poutre avant 102.

La quatrième roue 8 est une roue dite "folle" c'est-à-dire une roue qui est apte à rouler sur le sol et dont l'orientation angulaire autour d'un axe vertical n'est pas asservie et est laissée libre. Ainsi, la quatrième roue 8 va s'orienter d'elle-même en suivant la bonne trajectoire selon le mouvement du véhicule porte-outil automoteur 1 et les irrégularités du sol sur lequel elle roule. Par ailleurs, la quatrième roue 8 est avantageusement "tirée" lorsque le véhicule porte-outil automoteur 1 avance en ligne droite, c'est-à-dire que l'axe vertical autour duquel pivote la quatrième roue 8 est décalé vers l'avant dudit véhicule porte-outil automoteur 1 par rapport au plan vertical contenant l'axe horizontal de rotation de ladite quatrième roue 8. Cette configuration évite des rotations intempestives de la quatrième roue 8 autour de son axe vertical et accroît par conséquent la stabilité du véhicule porte-outil automoteur 1 lors de ses déplacements.

L'articulation du longeron 10 permet une parfaite adaptation du véhicule porte-outil automoteur 1 aux irrégularités du terrain sur lequel il se déplace en diminuant sensiblement par deux les différences de niveau, ce qui a pour effet de limiter les balancements.

Lesdites troisième et quatrième roues 7, 8 sont solidaires du longeron 10 articulé au châssis 61 du second module 6. La quatrième roue 8 est globalement alignée latéralement à la première roue 3 du premier module 2. On désigne ici par roues globalement alignées latéralement entre elles des roues ayant leur axe horizontal de rotation globalement concentriques et perpendiculaires au plan longitudinal vertical du véhicule porte-outil automoteur 1.

Toutefois dans la mesure où le diamètre de la quatrième roue 8 est de préférence inférieur à celui des première, deuxième et troisième roues 3, 4, 7, son axe horizontal de rotation est donc légèrement désaxé, en direction du bas et de l'extrémité du véhicule porte-outil automoteur 1, par rapport à l'axe horizontal de rotation la roue du premier module 2 sur laquelle elle est alignée latéralement, à savoir la première roue 3, de sorte que les première et quatrième roues 3, 8 sont aptes à passer en même temps sur un chevet situé à l'entrée dans la vigne évitant ainsi les mouvements de balancier dudit véhicule porte-outil automoteur 1.

La quatrième roue 8 a un diamètre inférieur à celui des première, deuxième et troisième roues 3, 4, 7 afin de ne pas trop empiéter sur l'espace latéral entre les rangs de plants et l'espace avant lorsque la quatrième roue 8 pivote autour de son axe vertical lors des changements de direction notamment avant-arrière du véhicule porte-outil automoteur 1.

La troisième roue 7 est une roue motrice dont le centre est disposé à proximité de la médiatrice du segment formé par les centres respectifs des première et deuxième roues 3, 4. Cette position assure une stabilité du véhicule car le centre de gravité du véhicule porte-outil automoteur 1 est situé à l'intérieur du triangle de sustentation défini par les points de contacts des première, deuxième et troisième roues 3, 4, 7.

On sait que pour qu'un véhicule ne dérape pas en virage il faut que toutes ses roues tournent autour d'un même point. On comprend bien que le fait de n'avoir que deux roues directrices située du même coté du véhicule porte-outil automoteur 1 favorise son comportement sain dans les courbes, notamment lorsque ledit véhicule porte-outil automoteur 1 tourne sur lui-même du coté opposé aux roues directrices, car, lors de cette manoeuvre, le véhicule porte-outil automoteur 1 peut tourner alors autour de la troisième roue 7 qui fait office de centre de rotation. De même, dans les courbes très serrées, le centre de rotation dudit véhicule porte-outil automoteur 1 se trouve alors entre les première, deuxième et troisième roues 3, 4, 7 et ladite troisième roue 7 tourne par conséquent dans un sens inverse à celui des première et deuxième roues 3, 4. Pour permettre notamment ces manoeuvres, il est nécessaire que ladite troisième roue 7 soit débrayable car soit elle reste alors quasiment immobile, soit elle tourne dans un sens inverse.

Par ailleurs, cette configuration avec deux roues directrices du même coté évite de mettre en place un mécanisme de direction particulièrement complexe agencé pour respecter l'épure de Jeantaud (épure permettant de déterminer l'orientation angulaire de chacune des roues d'un véhicule dans une courbe) lorsque le véhicule porte-outil automoteur 1 passe de la position "voie étroite" à la position "voie élargie". De plus, il n'y a plus d'usure anormale des pneumatiques comme avec les tracteurs classiques où l'épure de Jeantaud n'est jamais respectée avec précision.

Le véhicule porte-outil automoteur 1 est destiné à travailler dans des cultures en lignes, notamment des vignes qui sont en règle générale situées sur des coteaux plus ou moins inclinés. Lorsque l'inclinaison desdits coteaux est trop importante, le véhicule porte-outil automoteur 1 peut basculer sur un de ses cotés si son centre de gravité se retrouve en dehors de son référentiel d'appui au sol défini par ses roues 3, 4, 7, 8. Pour éviter cela, le véhicule porte-outil automoteur 1 comprend un dispositif anti-devers 11 agencé pour corriger son assiette et ainsi rétablir le bon positionnement de son centre de gravité. Pour ce faire, ce dispositif anti-devers 11 est de préférence solidaire du second module 6 et comporte avantageusement un tube 110 apte à coulisser en partie à l'intérieur de l'aile avant 62 du châssis 61 du second module 6 et dont l'extrémité libre est solidaire du longeron 10 en forme générale de demi-berceau du second module 6. Le dispositif anti-devers 11 comporte en outre actionneur 111 de type vérin double effet fixé entre le second module 6 et l'extrémité libre dudit tube 110. Ainsi, cet actionneur comprend un corps 112 solidaire de l'extrémité du tube 110 et une tige 113 apte à coulisser en partie à l'intérieur dudit corps 112 et dont l'extrémité est fixéé sur l'aile avant 62 du châssis 61 du second module 6. Cet actionneur 111 permet de faire varier la garde au sol du second module 6 et ainsi de faire varier l'assiette du véhicule porte-outil automoteur 1.

Pour des raisons écologiques et de réductions des rejets et des nuisances sonores, les première, deuxième et troisième roues 3, 4, 7 sont de préférence motorisées grâce à des moteurs électriques (non représentés). En effet, avec des moteurs hydrauliques par exemple, les fuites d'huiles, à la suite notamment de rupture de flexibles hydrauliques, sont relativement fréquentes et peuvent faire mourir les plantations et polluer le sol car les fluides hydrauliques sont chauds et toxiques. De même, ces fluides peuvent provoquer des brûlures au conducteur du véhicule porte-outil automoteur 1. Lesdits moteurs seront alimentés par des batteries (non représentées) disposées de préférence sous et derrière l'assise 51 de la cabine de pilotage 5. Toutefois, on pourra également disposer des batteries sur les plateformes avant et arrière 23, 24 du châssis 21 du premier module sous des capots 12. De même, on pourra disposer des batteries sur la partie basse du second module 6, cette configuration permettra d'accroître la stabilité du véhicule porte-outil automoteur 1 en répartissant la charge des batteries (éléments lourds) sur les premier et second modules 2, 6 et en abaissant le centre de gravité.

Le moteur de chacune des première, deuxième et troisième roues 3, 4, 7 est avantageusement un ensemble motoréducteur couplé à un frein électrique, qui, à l'arrêt du véhicule ou suite à une coupure de courant, joue le rôle de frein de stationnement et de frein d'urgence. Cet ensemble est, pour des raisons évidentes d'encombrement et de stabilité (la masse dudit ensemble étant importante), logé dans la jante de chacune desdites première, deuxième et troisième roues 3, 4, 7. Chaque moteur est couplé à un variateur (non représenté), logé avantageusement sur la plateforme avant 23 du châssis 21 du premier module sous le capot 12.

Si, comme décrit précédemment, le frein électrique assure les freinages de stationnement et d'urgence, le freinage de service est lui assuré par l'action des variateurs sur les moteurs électriques.

En outre, le véhicule porte-outil automoteur 1 comporte un dispositif de gestion électronique (non représenté) permettant de gérer indépendamment, par le biais desdits variateurs, la vitesse de rotation de chacune des première, deuxième et troisième roues 3, 4, 7. Toutefois, la troisième roue 7 est "maître" et les première et deuxième roues 3, 4 sont "esclaves", c'est-à-dire que la vitesse de rotation des première et deuxième roues 3, 4 est adaptée en fonction de celle de la troisième roue 7. Cette possibilité peut être intéressante lors de certaines manoeuvres notamment sur des coteaux inclinés. Ainsi, pour aider à maintenir en ligne le véhicule porte-outil automoteur 1 dans les devers sans utiliser le dispositif de direction, on pourra augmenter ou en diminuer la vitesse des première et deuxième roues 3, 4 par rapport à celle de la troisième roue 8. Afin de bénéficier de l'énergie électrique produite et stockée dans lesdites batteries, les moyens de réglage 91 et l'actionneur 111 sont avantageusement des vérins électriques à double effet. Bien sûr, ils peuvent être substitués par tout autre vérin tel que des vérins hydrauliques ou analogues ou par tout autre moyen actionnement procurant des effets similaires.

En outre, pour limiter la dimension, le poids et le coût des batteries embarquées dans le véhicule porte-outil automoteur 1, ce dernier comporte au moins un dispositif de production d'énergie (non représenté) pour permettre une charge permanente des batteries. Ces dispositifs de production d'énergie sont de préférence un dispositif placé dans chacune des première, deuxième, et troisième roues 3, 4, 7 motrices, mais également dans la quatrième roue 8 folle, et permettant de récupérer de l'énergie lors notamment des descentes et des phases de freinages. Ces dispositifs de production d'énergie peuvent également être des panneaux photovoltaïques disposés avantageusement sur l'élément de toiture 53 de la cabine de pilotage 5.

Enfin, les deux poutres 9 du véhicule porte-outil automoteur 1 peuvent chacune recevoir un outil agricole. Ainsi, ce véhicule porte-outil automoteur 1 pourra par exemple recevoir sur sa poutre 9 située à l'avant une palisseuse et sur sa poutre 9 située à l'arrière une rogneuse. Par ailleurs, l'assise 51 surbaissée du véhicule porte-outil automoteur 1 permet, d'une part, une vision excellente sur la mise en place et la position des agrafes et, d'autre part, un accès éventuel à la tête d'agrafage de la palisseuse.

### Description d'autres modes de réalisation

Dans une variante de réalisation non représentée, le réglage de la largeur de la voie se fait de préférence à l'arrêt du véhicule porte-outil automoteur pour éviter des contraintes mécaniques au niveau du châssis et des roues dudit véhicule. Pour ce faire, ce dernier comporte une cinquième roue escamotable (non représentée) agencée pour se déplacer verticalement et perpendiculairement à l'axe longitudinal dudit véhicule et être couplée aux moyens de réglage. Cette cinquième roue escamotable est solidaire du second module et permet d'augmenter la garde au sol dudit second module afin que les troisième et quatrième roues ne soient plus en contact avec le sol, le véhicule porte-outil automoteur ne repose alors plus que sur les première et deuxième roues et la cinquième roue escamotable. Ensuite, on fait varier la largeur de la voie en déplaçant le second module en appui sur la cinquième roue escamotable par rapport au premier module. Une fois la voie réglée, il suffit de faire remonter la cinquième roue escamotable pour replacer le véhicule porte-outil automoteur en appui sur ces quatre roues.

Selon une autre variante de réalisation non représentée, le véhicule porte-outil automoteur est semblable à celui décrit précédemment mais en diffère en ce qu'il comporte deux quatrièmes roues folles solidaires de son second module. Pour cela, ledit longeron est en forme de berceau comprenant une poutre médiane en forme globale de U évasé et une poutre avant et une poutre arrière, lesdites poutres avant et arrière s'étendant sensiblement horizontalement respectivement de l'extrémité libre de l'une des ailes de la poutre médiane. Ce longeron est articulé au châssis du second module autour d'un axe globalement horizontal et reçoit la troisième roue sur ladite poutre médiane, l'une des quatrièmes roues étant montée pivotante autour d'un axe sensiblement vertical sur la poutre avant et l'autre quatrième roue étant montée pivotante autour d'un axe sensiblement vertical sur la poutre arrière. L'une des quatrièmes roues est globalement alignée avec la première roue du premier module et l'autre quatrième roue est globalement alignée avec la deuxième roue du premier module.

Cette configuration permet, d'une part, d'accroître la stabilité du véhicule porte-outil automoteur notamment en marche arrière et, d'autre part, avec un poste de pilotage réversible, de faire des allers-retours en toute stabilité compte tenu de la présence d'un quatrième roue folle à l'avant et à l'arrière du véhicule porte-outil automoteur.

Selon une dernière variante de réalisation non représentée, le véhicule porte-outil automoteur comprend deux seconds modules semblables à celui décrit précédemment, disposés de part et d'autre du premier module et solidarisés au premier module par au moins une poutre de sorte à former un portique apte à enjamber au moins deux lignes de cultures et permettre l'installation de plusieurs outils agricoles tels que par exemple deux palisseuses et deux rogneuses. Chaque second module comportant notamment un longeron articulé à son châssis autour d'un axe globalement horizontal et recevant une troisième roue motrice et au moins une quatrième roue folle.

### Possibilité d'application industrielle

Le véhicule porte-outil automoteur 1 selon l'invention s'applique plus particulièrement à la culture en lignes, notamment de la vigne, mais il peut également être utilisé pour d'autres secteurs d'activité tels que les travaux publics par exemple.

Enfin, il va de soi que les exemples de véhicules porte-outil automoteur 1 conformes à l'invention qui viennent d'être décrits ne sont que des illustrations particulières, en aucun cas limitatives de l'invention.

## Revendications

1. Véhicule porte-outil automoteur (1) à au moins quatre roues dissymétriques de type tracteur enjambeur destiné à travailler dans des cultures en lignes, notamment de la vigne, comprenant un premier module (2) comportant une première et une deuxième roues (3, 4) alignées longitudinalement entre elles, au moins un second module (6) muni d'une troisième roue (7) et d'au moins une quatrième roue (8) alignées longitudinalement entre elles, ledit second module (6) étant solidarisé au premier module (2) par au moins une poutre (9) de sorte à former un portique apte à enjamber au moins une ligne de culture, ledit véhicule porte-outil automoteur (1) étant **caractérisé en ce que** les première et deuxième roues (3, 4) sont des roues motrices et directrices, **en ce que** la troisième roue (7) est une roue motrice dont le centre est disposé à proximité de la médiatrice du segment formé par les centres respectifs des première et deuxième roues (3, 4), et **en ce que** la quatrième roue (8) est une roue folle apte à pivoter librement autour d'un axe sensiblement vertical et est globalement alignée latéralement avec l'une des première et deuxième roues (3, 4) du premier module (2).

2. Véhicule porte-outil automoteur (1) selon la revendication précédente, **caractérisé en ce que en ce que** la quatrième roue (8) est tirée.

3. Véhicule porte-outil automoteur (1) selon l'une quelconque des revendications 1 ou 2, **caractérisé en ce que** en ce que lesdites troisième et quatrième roues (7, 8) sont solidaires d'un longeron (10) articulé par rapport audit second module (6).

4. Véhicule porte-outil automoteur (1) selon l'une quelconque des revendications 1 à 3, **caractérisé en ce que** le diamètre de la quatrième roue (8) est inférieur à celui des première, deuxième et troisième roues (3, 4, 7) et **en ce que** son axe horizontal de rotation est désaxé, en direction du bas et de l'extrémité du véhicule porte-outil automoteur (1), par rapport à l'axe horizontal de rotation la roue du premier module (2) sur laquelle elle est alignée latéralement.

5. Véhicule porte-outil automoteur (1) selon l'une quelconque des revendications 1 à 4, **caractérisé en ce que** la troisième roue (7) est débrayable.

6. Véhicule porte-outil automoteur (1) selon l'une quelconque des revendications précédentes, **caractérisé en ce qu'**il comporte un dispositif de direction permettant d'orienter les première et deuxième roues (3, 4) en sens inverse de sorte que lesdites première et deuxième roues (3, 4) se déplacent toujours sur la même courbe.

7. Véhicule porte-outil automoteur (1) selon la revendication précédente, **caractérisé en ce que** le dispositif de direction comprend un ensemble (roue dentée-vis sans fin-moteur) de type "SLEW DRIVE" couplé à chacune des première et deuxième roues 3, 4.

8. Véhicule porte-outil automoteur (1) selon l'une quelconque des revendications précédentes, **caractérisé en ce que** la poutre (9) est agencée pour recevoir un outil et comporte un moyen de réglage (91) permettant d'adapter l'écartement desdits premier et second modules (2, 6) entre eux.

9. Véhicule porte-outil automoteur (1) selon l'une quelconque des revendications précédentes, **caractérisé en ce qu'**il comprend deux poutres (9).

10. Véhicule porte-outil automoteur (1) selon la revendication 8, **caractérisé en ce que** la troisième roue (7) est apte à être tournée de 90° autour d'un axe sensiblement vertical pour permettre le déplacement du second module (6) par rapport au premier module (2) grâce aux moyens de réglage (91).

11. Véhicule porte-outil automoteur (1) selon la revendication 8, **caractérisé en ce qu'**il comporte une cinquième roue escamotable agencée pour se déplacer verticalement et perpendiculairement à son axe longitudinal et être couplée aux moyens de réglage (91).

12. Véhicule porte-outil automoteur (1) selon l'une quelconque des revendications précédentes, **caractérisé en ce qu'**il comprend un dispositif anti-devers (11) agencé pour corriger son assiette.

13. Véhicule porte-outil automoteur (1) selon les revendications 2 et 12, **caractérisé en ce que** le dispositif anti-devers (11) est solidaire du second module (6) et comporte un tube (110) solidaire du longeron (10) et apte à coulisser en partie à l'intérieur du second module (6) et un actionneur (111) fixé entre le second module (6) et l'extrémité dudit tube (110).

14. Véhicule porte-outil automoteur (1) selon l'une quelconque des revendications précédentes, **caractérisé en ce que** les première, deuxième et troisième roues (3, 4, 7) sont motorisées grâce à des moteurs électriques.

15. Véhicule porte-outil automoteur (1) selon les revendications 8 et 13, **caractérisé en ce que** les moyens de réglage (91) et l'actionneur (111) sont des vérins électriques à double effet.

16. Véhicule porte-outil automoteur (1) selon l'une quelconque des revendications précédentes, **caractérisé en ce qu'**il comporte cabine de pilotage (5) positionnée entre les première et deuxième roues (3, 4) avec une garde au sol peu importante de sorte que le conducteur puisse, d'une part, intervenir sur les cultures sans avoir à sortir de ladite cabine de pilotage (5) et, d'autre part, monter et descendre facilement et sans effort de ladite cabine de pilotage (5).

17. Véhicule porte-outil automoteur (1) selon l'une quelconque des revendications précédentes, **caractérisé en ce qu'**il comporte deux quatrièmes roues folles solidaires du second module.

18. Véhicule porte-outil automoteur (1) selon la revendication 17, **caractérisé en ce que** l'une des quatrièmes roues est globalement alignée latéralement avec la première roue du premier module et l'autre quatrième roue est globalement alignée latéralement avec la deuxième roue du premier module.

19. Véhicule porte-outil automoteur (1) selon l'une quelconque des revendications précédentes, **caractérisé en ce qu'**il comporte deux seconds modules munis chacun d'une troisième roue et d'au moins une quatrième roue folle alignées longitudinalement entre elles.

20. Véhicule porte-outil automoteur (1) selon l'une quelconque des revendications précédentes, **caractérisé en ce qu'**il comporte au moins un dispositif de production d'énergie pour permettre une charge permanente des batteries, le dispositif de production d'énergie étant choisi dans le groupe comprenant un dispositif permettant de récupérer de l'énergie lors notamment des descentes et des phases de freinages et des panneaux photovoltaïques.

## Patentansprüche

1. Selbstfahrendes Werkzeug-Transportfahrzeug (1) mit mindestens vier unsymmetrischen Rädern nach Art eines Stelzentraktors zum Arbeiten in Reihenkulturen, insbesondere beim Weinanbau, umfassend ein erstes Modul (2), das ein erstes und ein zweites Rad (3, 4) umfasst, die in Längsrichtung aufeinander ausgerichtet sind, mindestens ein zweites Modul (6), das mit einem dritten Rad (7) und mit mindestens einem vierten Rad (8), die in Längsrichtung aufeinander ausgerichtet sind, versehen ist, wobei das zweite Modul (6) mit dem ersten Modul (2) durch mindestens einen Träger (9) derart fest verbunden ist, dass es eine Überbrückung bildet, die dazu geeignet ist, um mindestens eine Kulturreihe zu überbrücken, wobei das selbstfahrende Werkzeug-Transportfahrzeug (1) **dadurch gekennzeichnet ist, dass** die ersten und zweiten Räder (3, 4) Antriebs- und Lenkräder sind, dass das dritte Rad (7) ein Antriebsrad ist, dessen Mittelpunkt in der Nähe der Mittelsenkrechten des Segments, das durch die jeweiligen Mittelpunkte der ersten und zweiten Räder (3, 4) gebildet wird, angeordnet ist, und dass das vierte Rad (8) ein freilaufendes Rad ist, das frei um eine Achse schwenken kann, die im Wesentlichen senkrecht ist, und im Allgemeinen seitlich auf eines von dem ersten und dem zweiten Rad (3, 4) des ersten Moduls (2) ausgerichtet ist.

2. Selbstfahrendes Werkzeug-Transportfahrzeug (1) nach dem vorhergehenden Anspruch, **dadurch gekennzeichnet, dass** das vierte Rad (8) mitgenommen wird.

3. Selbstfahrendes Werkzeug-Transportfahrzeug (1) nach einem der Ansprüche 1 oder 2, **dadurch gekennzeichnet, dass** die dritten und vierten Räder (7, 8) mit einem Längsträger (10) fest verbunden sind, der im Verhältnis zu dem zweiten Modul (6) angelenkt ist.

4. Selbstfahrendes Werkzeug-Transportfahrzeug (1) nach einem der Ansprüche 1 bis 3, **dadurch gekennzeichnet, dass** der Durchmesser des vierten Rades (8) kleiner als derjenige der ersten, zweiten und dritten Räder (3, 4, 7) ist, und dass seine waagerechte Drehachse nach unten und in Richtung auf das Ende des selbstfahrenden Werkzeug-Transportfahrzeugs (1) im Verhältnis zur waagerechten Drehachse des Rades des ersten Moduls (2), auf das sie seitlich ausgerichtet ist, abgesetzt ist.

5. Selbstfahrendes Werkzeug-Transportfahrzeug (1) nach einem der Ansprüche 1 bis 4, **dadurch gekennzeichnet, dass** das dritte Rad (7) ausrückbar ist.

6. Selbstfahrendes Werkzeug-Transportfahrzeug (1) nach einem der vorhergehenden Ansprüche, **dadurch gekennzeichnet, dass** es eine Richtungsvorrichtung umfasst, die es ermöglicht, die ersten und zweiten Räder (3, 4) in umgekehrter Richtung zu orientieren, so dass sich die ersten und zweiten Räder (3, 4) immer auf der gleichen Kurve bewegen.

7. Selbstfahrendes Werkzeug-Transportfahrzeug (1) nach dem vorhergehenden Anspruch, **dadurch gekennzeichnet, dass** die Richtungsvorrichtung eine Baugruppe (Zahnrad/ endlose Schnecke/ Motor) nach Art eines Schwenkantriebs umfasst, der mit jedem von dem ersten und dem zweiten Rad (3, 4) gekoppelt ist.

8. Selbstfahrendes Werkzeug-Transportfahrzeug (1) nach einem der vorhergehenden Ansprüche, **dadurch gekennzeichnet, dass** der Träger (9) angeordnet ist, um ein Werkzeug aufzunehmen, und ein Einstellmittel (91) umfasst, das es ermöglicht, den Abstand zwischen den ersten und zweiten Modulen (2, 6) anzupassen.

9. Selbstfahrendes Werkzeug-Transportfahrzeug (1) nach einem der vorhergehenden Ansprüche, **dadurch gekennzeichnet, dass** es zwei Träger (9) umfasst.

10. Selbstfahrendes Werkzeug-Transportfahrzeug (1) nach Anspruch 8, **dadurch gekennzeichnet, dass** das dritte Rad (7) dazu geeignet ist, um um eine im Wesentlichen senkrechte Achse um 90° gedreht zu werden, um die Bewegung des zweiten Moduls (6) im Verhältnis zu dem ersten Modul (2) dank der Einstellmittel (91) zu ermöglichen.

11. Selbstfahrendes Werkzeug-Transportfahrzeug (1) nach Anspruch 8, **dadurch gekennzeichnet, dass** es ein fünftes einziehbares Rad umfasst, das angeordnet ist, um sich senkrecht und rechtwinklig zu seiner Längsachse zu bewegen und mit den Einstellmitteln (91) gekoppelt zu sein.

12. Selbstfahrendes Werkzeug-Transportfahrzeug (1) nach einem der vorhergehenden Ansprüche, **dadurch gekennzeichnet, dass** es eine Querstabilisierung (11) umfasst, die angeordnet ist, um seine Lage zu korrigieren.

13. Selbstfahrendes Werkzeug-Transportfahrzeug (1) nach Anspruch 2 und 12, **dadurch gekennzeichnet, dass** die Querstabilisierung (11) mit dem zweiten Modul (6) fest verbunden ist und eine Röhre (110) umfasst, die mit dem Längsträger (10) fest verbunden ist und dazu geeignet ist, um teilweise im Innern des zweiten Moduls (6) zu gleiten, und ein Stellglied (111) umfasst, das zwischen dem zweiten Modul (6) und dem Ende der Röhre (110) befestigt ist.

14. Selbstfahrendes Werkzeug-Transportfahrzeug (1) nach einem der vorhergehenden Ansprüche, **dadurch gekennzeichnet, dass** die ersten, zweiten und dritten Räder (3, 4, 7) anhand von Elektromotoren motorisiert sind.

15. Selbstfahrendes Werkzeug-Transportfahrzeug (1) nach Anspruch 8 und 13, **dadurch gekennzeichnet, dass** die Einstellmittel (91) und das Stellglied (111) elektrische Doppeleffektzylinder sind.

16. Selbstfahrendes Werkzeug-Transportfahrzeug (1) nach einem der vorhergehenden Ansprüche, **dadurch gekennzeichnet, dass** es eine Fahrerkabine (5) umfasst, die zwischen den ersten und zweiten Rädern (3, 4) mit geringer Bodenfreiheit positioniert ist, so dass der Fahrer einerseits an den Kulturen eingreifen kann, ohne die Fahrerkabine (5) verlassen zu müssen, und andererseits mühelos in die Fahrerkabine (5) einsteigen und daraus aussteigen kann.

17. Selbstfahrendes Werkzeug-Transportfahrzeug (1) nach einem der vorhergehenden Ansprüche, **dadurch gekennzeichnet, dass** es zwei vierte freilaufende Räder umfasst, die mit dem zweiten Modul fest verbunden sind.

18. Selbstfahrendes Werkzeug-Transportfahrzeug (1) nach Anspruch 17, **dadurch gekennzeichnet, dass** eines der vierten Räder insgesamt seitlich auf das erste Rad des ersten Moduls und das andere vierte Rad insgesamt seitlich auf das zweite Rad des ersten Moduls ausgerichtet ist.

19. Selbstfahrendes Werkzeug-Transportfahrzeug (1) nach einem der vorhergehenden Ansprüche, **dadurch gekennzeichnet, dass** es zwei zweite Module umfasst, die jeweils mit einem dritten Rad und mindestens einem vierten freilaufenden Rad versehen sind, die aufeinander ausgerichtet sind.

20. Selbstfahrendes Werkzeug-Transportfahrzeug (1) nach einem der vorhergehenden Ansprüche, **dadurch gekennzeichnet, dass** es mindestens eine Energieerzeugungsvorrichtung umfasst, um eine dauerhafte Aufladung der Batterien zu ermöglichen, wobei die Energieerzeugungsvorrichtung aus der Gruppe gewählt wird, die eine Vorrichtung umfasst, die es ermöglicht, insbesondere beim Bergabfahren und in Bremsphasen und aus Photovoltaikmodulen Energie wiederzugewinnen.

## Claims

1. Self-propelled tool-carrier vehicle (1) with at least four asymmetric wheels of the saddle tractor type intended for work in row crops, in particular vines, comprising a first module (2) comprising a first and a second wheels (3, 4) longitudinally aligned with each other, at least one second module (6) provided with a third wheel (7) and at least one fourth wheel (8) longitudinally aligned with each other, said second module (6) being integral with the first module (2) by at least one beam (9) in such a way as to form a gantry able to saddle at least one row crop, said self-propelled tool-carrier vehicle (1) being **characterised in that** the first and second wheels (3, 4) are driving and steering wheels, **in that** the third wheel (7) is a driving wheel of which the centre is arranged in the vicinity of the bisector of the segment formed by the respective centres of the first and second wheels (3, 4), and **in that** the fourth wheel (8) is an idler wheel able to freely pivot about a substantially vertical axis and is generally laterally aligned with one of the first and second wheels (3, 4) of the first module (2).

2. Self-propelled tool-carrier vehicle (1) as claimed in the preceding claim, **characterised in that** the fourth wheel (8) is pulled.

3. Self-propelled tool-carrier vehicle (1) according to any of claims 1 or 2, **characterised in that** said third and fourth wheels (7, 8) are integral with a spar (10) articulated in relation to said second module (6).

4. Self-propelled tool-carrier vehicle (1) according to any of claims 1 to 3, **characterised in that** the diameter of the fourth wheel (8) is less than that of the first, second and third wheels (3, 4, 7) and **in that** its horizontal axis of rotation is offset, in a downward direction and from the end of the self-propelled tool-carrier vehicle (1), in relation to the horizontal axis of rotation of the wheel of the first module (2) whereon it is laterally aligned.

5. Self-propelled tool-carrier vehicle (1) according to any of claims 1 to 4, **characterised in that** the third wheel (7) can be disengaged.

6. Self-propelled tool-carrier vehicle (1) as claimed in any preceding claim, **characterised in that** it comprises a device for directing making it possible to orient the first and second wheels (3, 4) in the opposite direction in such a way that said first and second wheels (3, 4) always move on the same curve.

7. Self-propelled tool-carrier vehicle (1) as claimed in the preceding claim, **characterised in that** the device for directing comprises a unit (gear-worm-motor) of the "SLEW DRIVE" type coupled to each of the first and second wheels 3, 4.

8. Self-propelled tool-carrier vehicle (1) as claimed in any preceding claim, **characterised in that** the beam (9) is arranged in order to receive a tool and comprises means for adjusting (91) making it possible to adapt the spacing of said first and second modules (2, 6) between them.

9. Self-propelled tool-carrier vehicle (1) as claimed in any preceding claim, **characterised in that** it comprises two beams (9).

10. Self-propelled tool-carrier vehicle (1) according to claim 81 **characterised in that** the third wheel (7) is able to be rotated 90° about a substantially vertical axis in order to allow for the displacement of the second module (6) in relation to the first module (2) thanks to the means for adjusting (91).

11. Self-propelled tool-carrier vehicle (1) according to claim 8, **characterised in that** it comprises a retractable fifth wheel arranged in order to be displaced vertically and perpendicularly to its longitudinal axis and be coupled to the means for adjusting (91).

12. Self-propelled tool-carrier vehicle (1) as claimed in any preceding claim, **characterised in that** it comprises an anti-roll device (11) arranged to correct its attitude.

13. Self-propelled tool-carrier vehicle (1) according to claims 2 and 12, **characterised in that** the anti-roll device (11) is integral with the second module (6) and comprises a tube (110) integral with the spar (10) and able to slide in part into the second module (6) and an actuator (111) fixed between the second module (6) and the end of said tube (110).

14. Self-propelled tool-carrier vehicle (1) as claimed in any preceding claim, **characterised in that** the first, second and third wheels (3, 4, 7) are motorised thanks to electric motors.

15. Self-propelled tool-carrier vehicle (1) according to claims 8 and 13, **characterised in that** the means for adjusting (91) and the actuator (111) are double-acting electric cylinders.

16. Self-propelled tool-carrier vehicle (1) as claimed in any preceding claim, **characterised in that** it comprises a driver's cabin (5) positioned between the first and second wheels (3, 4) with a relatively limited ground clearance in such a way that the driver can, on the one hand, act on the crops without having to leave said driver's cabin (5) and, on the other hand, easily and effortlessly enter and exit said driver's cabin (5).

17. Self-propelled tool-carrier vehicle (1) as claimed in any preceding claim, **characterised in that** it comprises two fourth idler wheels integral with the second module.

18. Self-propelled tool-carrier vehicle (1) according to claim 17, **characterised in that** one of the fourth wheels is generally laterally aligned with the first wheel of the first module and the other fourth wheel is generally laterally aligned with the second wheel of the first module.

19. Self-propelled tool-carrier vehicle (1) as claimed in any preceding claim, **characterised in that** it comprises two second modules each provided with a third wheel and with at least one fourth wheel longitudinally aligned with each other.

20. Self-propelled tool-carrier vehicle (1) as claimed in any preceding claim, **characterised in that** it comprises at least one device for the production of energy in order to allow for a steady charge of the batteries, with the device for producing energy being selected from the group consisting of a device making it possible to recover energy during in particular from descents and braking phases and photovoltaic panels.
